# EUROPEAN PATENT APPLICATION

(11) **EP 1 621 966 A1**
(43) Date of publication of application: **01.02.2006**
(21) Application number: 04017558.0
(22) Date of filing: 23.07.2004
(51) Int. Cl.: G06F 1/16

(54) **Notebook with a modular frame**

(71) Applicant: VAC Corporation, Taipei (TW)
(72) Inventor: Shih, Po-Tsung, Taipei (TW); Hua, Chung-Cheng, Taipei (TW)
(74) Representative: Viering, Jentschura & Partner

(57) **Abstract**

A notebook with a modular frame has a host, and a monitor. The host has a frame, and upper and lower shells respectively secured on the frame. The frame is formed with a flat top board, and partitions are formed on a bottom of the top board to define a plurality of downward cavities. The top board is formed with a central opening. A plurality of electronic elements are respectively assembled in the cavities, which are a motherboard, a dissipating module, a battery, and a data recess device. The motherboard has connectors exposed outside the opening of the frame. The monitor is pivotally connecting to a side of the frame. When the lower shell is removed, the cavities of the frame are exposed for convenient installation or removal of the electronic elements.

## Description

### BACKGROUND OF THE INVENTION

### 1. Field of the Invention

The present invention relates to a notebook with a modular frame, and particularly to a notebook having a frame of modular design, so that electronic elements therein can be easily replaced or upgraded.

### 2. Description of the Prior Art

Notebook computers are advantageously light and portable, but cannot be assembled or upgraded, like desktop PCs, by a user. Notebooks thus have an image of inflexibility with regard to upgrading. In another aspect, these problems make the manufacturers have little capacity of stocks and reserves. For the users, when the notebook is old or the functions thereof need to be expanded, the only solution is to buy a new notebook.

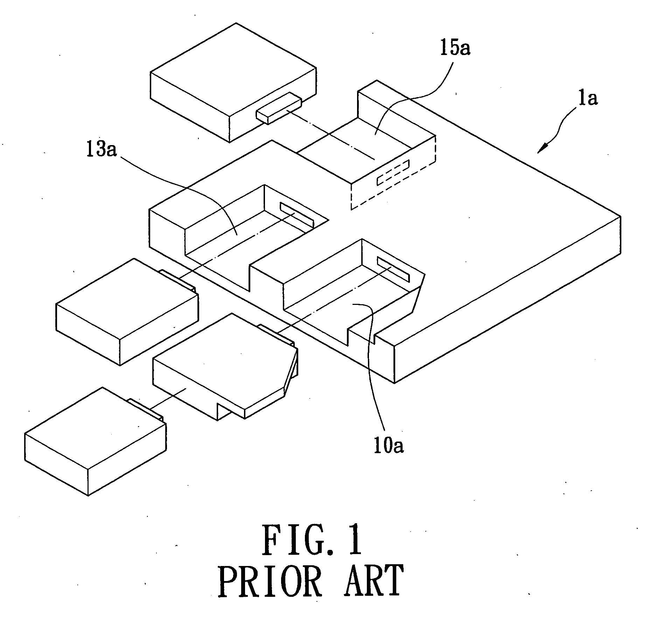

FIG. 1 is an illustration of the prior art. For accommodating multifunctional peripherals or upgrades, the notebook has a host 1a formed with a plurality of insertion slots 10a, 13a, 15a for receiving different peripherals therein, such as floppy disks, hard disks, or VCDs. Each of the insertion slots has a connector for electrically connecting with the peripherals.

The above-described conventional notebook is limited in peripheral replacement, so that the users still cannot upgrade the motherboard, CPU, or memory thereof. With the above-described problems of the prior art in view, an object of the present invention is to provide a notebook with a modular frame.

### SUMMARY OF THE INVENTION

An object of the present invention is to provide notebook with a modular frame that allows the user to maintain, replace or upgrade the notebook very easily after disassembling the lower shell.

In order to achieve the above objects, the present invention according to one aspect thereof provides a notebook with a modular frame, which comprises a host and a monitor. The host has a frame, and upper and lower shells respectively secured on the frame. The frame is formed with a flat top board, and a plurality of partitions are formed on a bottom of the top board to define a plurality of downward cavities. The top board is formed with a central opening. A plurality of electronic elements are respectively assembled,in the cavities, which comprises a motherboard, a dissipating module, a battery, and a data recess device. The motherboard has connectors exposed outside the opening of the frame. The monitor is pivotally connecting to a side of the frame; when the lower shell is removed, the cavities of the frame are exposed for convenient installation or removal of the electronic elements.

### BRIEF DESCRIPTION OF THE DRAWINGS

The invention will be better understood and objects other than those set forth above will become apparent when consideration is given to the following detailed description thereof. Such description makes reference to the annexed drawings, wherein:
FIG. 1 is a perspective view of a host of a notebook of prior art;
FIG. 2 is a perspective view of a notebook with a modular frame according to the present invention;
FIG. 3 is a perspective view of the notebook with a modular frame according to the present invention from another point of view;
FIG. 4 is an upward exploded view of the notebook with a modular frame according to the present invention (without a lower shell); and
FIG. 5 is an upward assembled view of the notebook with a modular frame according to the present invention (without a lower shell).

### DESCRIPTION OF THE PREFERRED EMBODIMENT

Referring to the FIG.S 2 and 3, the perspective views of the present invention are illustrated. The present invention is relates a notebook 1, which comprises a host 2 and a display panel 3. The host 2 has a frame 4 assembled therein, and a pair of upper and lower shells 21, 22.

The upper and lower shells 21, 22 are respectively secured on the frame 4. The upper shell 21 is assembled with a keyboard 212, and the upper shell 21 is secured on the frame 4 via screws 214. The lower shell 22 is integrally formed with a flat back and is secured upwardly on the frame 4 via screws 222, so that the lower shell 22 is conveniently removed. The display panel 3 is pivotally mounted on one side of the frame 4 via a pair of hinges 32.

The frame 4 is made of a light alloy by molding, and a magnesium alloy is preferable. The magnesium alloy has the advantages of being light, solid, conductive, shockproof, a good heat dissipater, anti-EMI, easily recycled for environmental protection, and modular assembling for enhancing production efficiency. The frame 4 is formed with a flat top board 42, and a plurality of partitions 44 are formed on a bottom of the top board 42 to define a plurality of downward cavities. The top board 42 is formed with a central opening 420 positioned under the keyboard 212. In this embodiment, the cavities comprise a first cavity 401, a second cavity 402, a third cavity 403, and a fourth cavity 404 for receiving a plurality of electronic elements 5 respectively therein. The electronic elements 5 comprise a motherboard 51, a dissipating module 52, a battery 53, and a data recess device 54 which are assembled respectively in the first cavity 401, the second cavity 402, the third cavity 403, and the fourth cavity 404. The motherboard 51, the dissipating module 52, and the battery 53 are vertically mounted in the frame 4, and the data recess device 54 is mounted laterally in the frame 4. Each of the electronic elements 5 has a cable extending to the central opening 420 of the top board 42 of the frame 4.

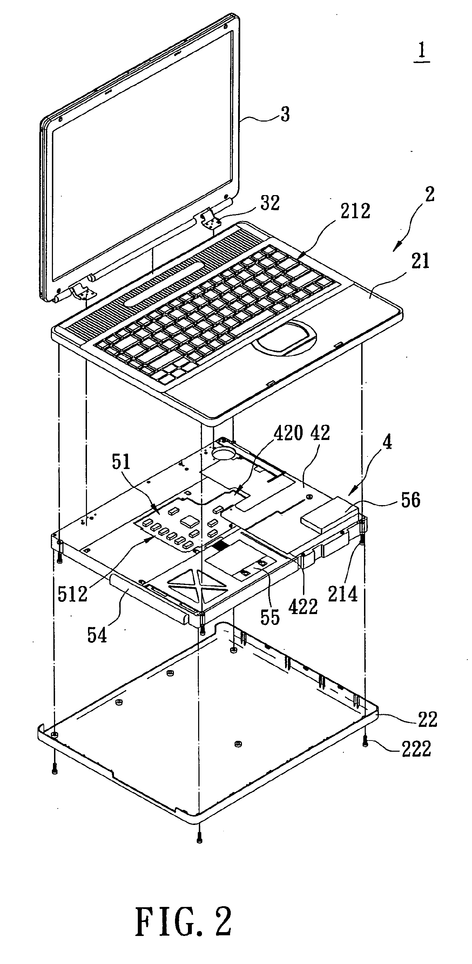

Referring to the FIG. 2, the motherboard 54 has connectors 512 exposed outside the central opening 420 of the frame 4 for electrically connecting with the electronic elements 5 and peripheral devices. When disassembling the upper shell 21, even if only the keyboard 212 is disassembled, all the cable of the electronic elements 5 and periphery devices are exposed clearly on the motherboard 51. The user or maintenance man can separate a cable from the motherboard 51 for easy maintenance or element replacement.

The frame 4 further has some electronic elements 5 on an upper surface of the top board 42, which comprises a touch panel 55 for operation, and an electrical card connector 56 for reading and writing different electrical cards. The top board 42 of the frame 4 is formed with a plurality of slots 422 for cables of the electrical elements 5 mounted on the top board 42 extending downward and electrically connecting to the connectors 512 of the motherboard 51.

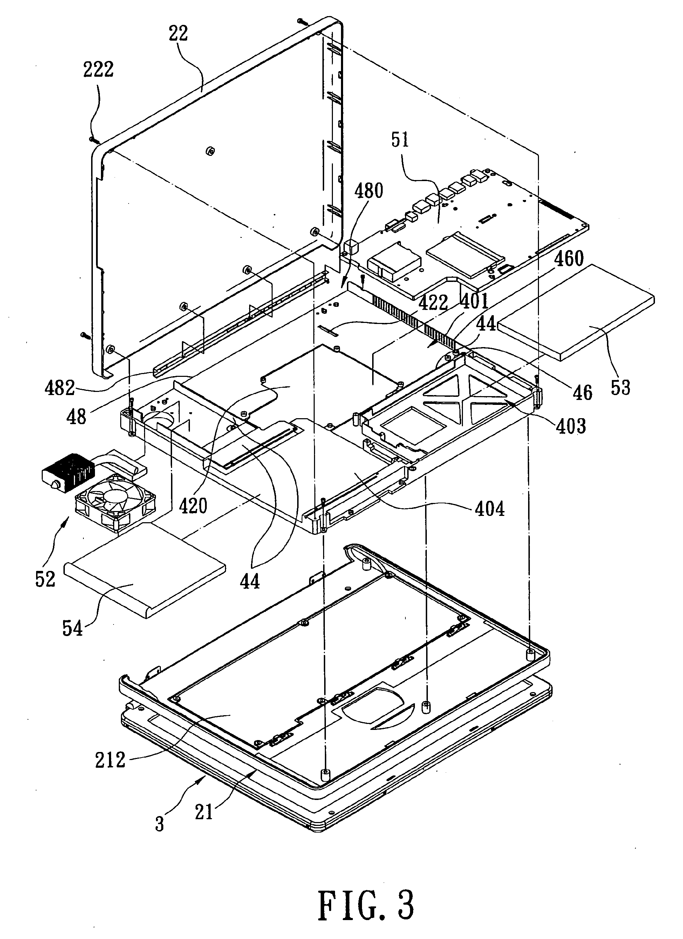

Referring to FIG. 3, the frame 4 is formed with a plurality of ventilating slits 460 in sides thereof for dissipating heat from the motherboard 51. One side 48 of the frame 4, which is adjacent to the connecting ports of the motherboard 51, is formed with a cutout 480, and the cutout 480 is secured with a port panel 482.

When the notebook of the present invention is reversed, and the lower shell 22 is removed by just removing some screws, the cavities 401, 402, 403, 404 of the frame 4 are exposed for convenient installation or removal of the electronic elements 5. The user or a maintenance man can see clearly the electronic elements 5 identically assembled and remove or replace the same very conveniently.

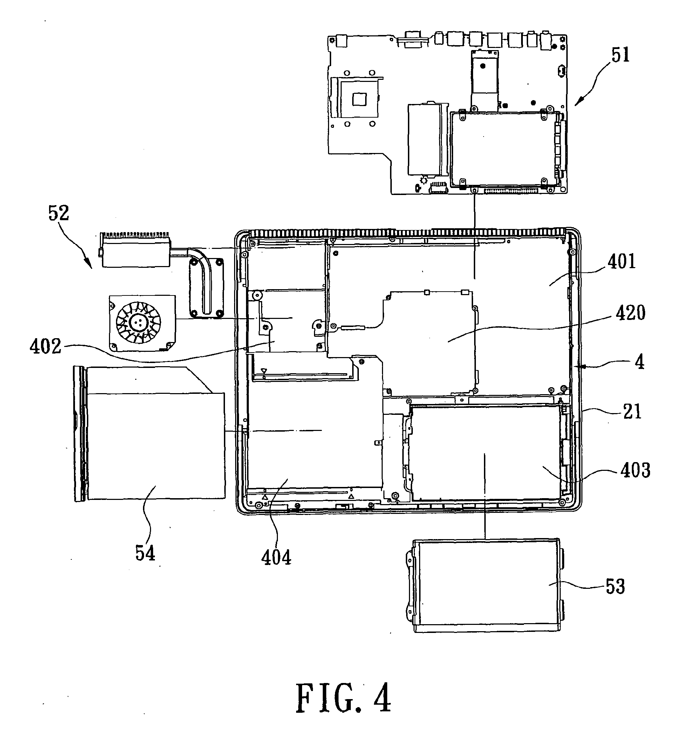

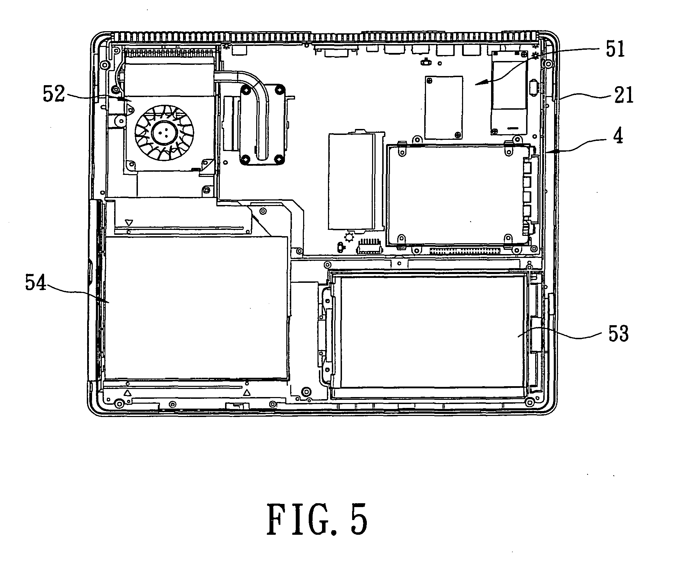

Referring to the FIGS. 4 and 5, the notebook with a modular frame of the present invention is separated from the lower shell with an upward view. When the notebook 1 is separated from the lower shell 22, all the electronic elements 5 are obviously screwed on the frame 4; the electronic elements 5 are thus easily installed or replaced. In particular, the motherboard 51 is on a board, and the user can personally perform upgrades. The data recess device 54 is similarly easy to upgrade; for example, a CD-ROM drive can be upgraded to a DVD drive, so that the notebook enjoys a DIY (Do It Yourself) advantage.

A summary of the characteristics and advantages of the notebook with a modular frame, and especially the frame, is as follows: 1. The module design of the frame allows all the electronic elements to be installed on the bottom thereof in an identical way, so that the user maintains, replaces or upgrades the notebook very easily. The present invention solves the upgrading problem of the conventional notebook.
2. The frame has a central opening for exposing all the connecters of the motherboard in the same place, so that the cables of the electronic elements are easily removed. A user can even remove and upgrade the electronic elements by him or herself.
3. The frame allows the upper and lower shells to be assembled thereon conveniently, so that the appearance of the notebook can be conveniently varied.

The notebook with a modular frame of the present invention makes a clean sweep of the inability to upgrade of the prior art, and creates more capacity of reserves and stocks for the manufacturer to reduce the cost and risk. It is anticipative that the modular frame will become the trend and the notebook will be cheap and popular.

Although the present invention has been described with reference to the preferred embodiments thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A notebook with a modular frame, comprising:
a host, comprising:
a frame formed with a flat top board, and a plurality of partitions formed on a bottom of the top board to define a plurality of downward cavities, wherein the top board is formed with a central opening;
a plurality of electronic elements respectively assembled in the cavities, comprising a motherboard, a dissipating module, a battery, and a data recess device, wherein the motherboard has connectors exposed outside the opening of the frame; and
upper and lower shells respectively secured on the frame; and
a monitor pivotally connecting to a side of the frame;
wherein when the lower shell is removed, the cavities of the frame are exposed for installing or removing the electronic elements conveniently.

2. The notebook with a modular frame as in claim 1, wherein the frame is made of magnesium alloy.

3. The notebook with a modular frame as in claim 1, wherein cavities comprises a first cavity, a second cavity, a third cavity, and a fourth cavity, respectively receiving the motherboard, the dissipating module, the battery and the data recess device.

4. The notebook with a modular frame as in claim 3, wherein the motherboard, the dissipating module, and the battery are vertically mounted in the frame, and the data recess device is mounted laterally in the frame.

5. The notebook with a modular frame as in claim 1, wherein each of the electronic elements has a cable extending to the central opening of the top board of the frame.

6. The notebook with a modular frame as in claim 1, the top board of the frame has a touch panel mounted on an upper surface thereof.

7. The notebook with a modular frame as in claim 6, further comprising a electrical card connector mounted on the upper surface of the top board of the frame.

8. The notebook with a modular frame as in claim 1, wherein the top board of the frame is formed with a plurality of slots for cables of the electrical elements mounted on the top board to extend downward and electrically connect to the motherboard.

9. The notebook with a modular frame as in claim 1, wherein the frame is formed with a plurality of ventilating slits in sides thereof.

10. The notebook with a modular frame as in claim 1, wherein a side of the frame adjacent connecting ports of the motherboard is formed with a cutout, and the cutout is secured with a port panel.
